# EUROPEAN PATENT SPECIFICATION

(11) **EP 3 634 827 B1**
(45) Date of publication and mention of the grant of the patent: **02.06.2021**
(21) Application number: 18750477.4
(22) Date of filing: 05.06.2018
(51) Int. Cl.: B61D 3/20, B61D 45/00, B61D 3/00, B61D 3/14, B60P 7/13

(54) **UNIVERSAL SYSTEM FOR TRANSPORTING REMOVABLE FREIGHT MODULES**
UNIVERSELLES SYSTEM ZUM TRANSPORT VON ABNEHMBAREN FRACHTMODULEN
SYSTÈME UNIVERSEL DE TRANSPORT DE MODULES DE FRET AMOVIBLES

(30) Priority: 06.06.2017 RU 2017119770
(43) Date of publication of application: 15.04.2020
(73) Proprietor: Rail 1520 IP Ltd., Nicosia 1066 (CY)
(72) Inventor: SAVUSHKIN, Roman Aleksandrovich, Moscow 121069 (RU); KYAKK, Kirill Valterovich, Saint Petersburg 195027 (RU); KONONENKO, Aleksandr Sergeevich, Tosno 187000 (RU); VLADIMIROV, Aleksandr Viktorovich, Engels 413212 (RU); LYALENKO, Daniil Alekseevich, Saint Petersburg 194295 (RU)
(74) Representative: Leonhard, Frank Reimund
(86) International application number: PCT/IB2018/054016
(87) International publication number: WO 2018/224959

(56) References cited:
- EP-A1- 0 519 234
- DE-U- 6 945 828
- DE-U1-202007 007 902
- FR-A1- 2 250 657
- FR-A1- 2 704 820
- RU-U1- 170 576

## Description

The invention relates to transportation of removable freight modules made in the form of quick-releasable and quick-mountable containers, frames, reservoirs, for transporting various types of cargo on a railway vehicle, for example, in the form of separate or articulated flatcars.

There is known a railway flatcar for transporting removable freight modules in the form of containers, wherein the railway flatcar comprises extendable fitting stops, fixing means for fixing removable freight modules on a flatcar, see KR Nº20090100048, B61D 3/20, published on 11 September, 2013.

There is known a system for transporting freight modules on railway rolling stock in the form of an articulated car, the system comprising elements for locating and fixing the removable freight modules, see RU Nº2457968, B61D 3/20, B61F 1/02, published on 10 August, 2012.

There is also known a removable freight modules transportation system in the form of railway rolling stock, used for installing, fixing and transporting removable freight modules configured to contain various types of cargo, wherein the railway rolling stock has elements for locating and fixing the removable freight modules, see patent RU Nº82174, B61D 3/08, published on 20 April, 2009 (prototype).

There is also known a railway wagon comprising two shock-receiving box structures installed on bogies and rigidly connected by a longitudinal member, said wagon having a detachable superstructure, having wedges interacting with cavities of the rolling stock and a centering stud interacting with other cavities provided in the shock-receiving box structures, see FR 2 250 657 A1, B61F1/00, published on 9 November, 1973.

There is also known a railway wagon comprising an articulated flatcar having pivoting platforms with wedges, configured to transport containers that are installed on said pivoting platforms between the wedges so that the containers may turn in relation to the rolling stock when the wagon is passing curved tracks RU 170 576 U1, B61D 17/00, published on 28 April 2016.

There is also known a railway wagon comprising an articulated flatcar having pivoting platforms with wedges, configured to transport containers that are installed on said pivoting platforms while the containers are secured on the wedges located on ends of the platforms using corner fittings installed on the containers DE 6945828, B61D45/00, published on 29 June 1972.

There is also known a railway wagon comprising a flatcar with a plurality of wedges interacting with a plurality of fittings installed on containers in order to provide a safe and secure transportation of said containers, FR2704820, B50P7/13, published on 10 November 1994.

There is also known a container having a frame with posts provided with consoles to transport timber, DE202007007902, B61D3/08, published on 30 August 2007.

There is also known a tank container configured to be directly secured on vehicle loading surfaces, wherein one of two fittings present at opposite ends of the container is attached rigidly while the other one can be pivoted between an operating position and a position of rest, EP0519234, published on 13 December 1992.

A common technical challenge among said devices is low utilization efficiency due to time-consuming processes of positioning and fixing removable freight modules on railway rolling stock comprising only fitting stops, which require accurate relative positioning of the freight modules locating elements and fitting stops having small coupling sizes and guide elements. Moreover, the devices mentioned above require substantial time and manual work to ensure operational condition of every fitting stop and fixing device. In all structures mentioned above, locating elements are placed on the railway rolling stock perimeter and rest on peripheral longitudinal, transverse, end girders, which are not strong and rigid enough and thus require additional construction reinforcement means, for example, in the form of ribs, bracing pieces, gussets, additional girders or covering plates.

The system according the invention:
- improves efficiency of railroad infrastructure facilities due to decreasing time needed for freight modules installation and removal,
- increases versatility of the system,
- provides versatility of its application due to broader nomenclature of transported cargo by creating special purpose removable freight modules,
- improves reliability of the system units due to redirection of force that transported removable freight modules apply from longitudinal side, transverse, and end girders of the rolling stock frame, as in known similar systems, directly to the center girder of the rolling stock frame, which is the strongest and the most rigid element of the load-carrying structure.

This is achieved by a transportation universal system for transporting removable freight modules with the technical features of claim 1.

The support bottom pivot bearings mounted on the railway rolling stock can be located on the central longitudinal axis of the railway rolling stock, and mating locating top pivot bearings fixed to the removable freight modules can be also located on the central longitudinal axis of a removable freight module.

The support bottom pivot bearings mounted on the railway rolling stock can be in the form of locating bushings with vertical guide openings having a diameter d₁ and configured to receive mating locating top pivot bearings, fixed to the removable freight modules in the form of guide pins having a diameter D; the support bottom pivot bearings mounted on the railway rolling stock can be vertical guide pins having a diameter D, wherein mating locating top pivot bearings fixed to removable freight modules are in the form of locating bushings with guide openings having a diameter d₁; wherein the diameter D of guide pins can be in a range of 50 to 350 mm and a height H is in a range of 45 to 380 mm; the diameter d₁ of the guide openings can be in a ratio range of 1.05 D to 1.46 D mm; an interaxial distance Lₒ ratio between the support top pivot bearings of removable freight modules and the body length Lₖ is in a range of 0.5 to 0.995.

The support bottom pivot bearings mounted of the railway rolling stock are fixed to the railway rolling stock center girder.

An articulated flatcar with its frames pivotally connected through an articulating assembly and mounted on a bogie is used as railway rolling stock for the proposed universal system for transporting removable freight modules; wherein articulated frame ends of the railway rolling stock are mounted on the middle common bogie.

To place one of the a removable freight modules into the area between flatcars above the articulated flatcar articulating assembly, there are additional locating retaining elements, configured for compensatory angular and linear movement relative to articulated frames, as the railway rolling stock passes curved tracks, mounted on the articulated ends of the frames; additional locating retaining elements can be fitting supports fixed to the rotatable bottom shelves mounted so as to allow rotation in a horizontal plane and compensatory linear movement parallel to the longitudinal central axis of the railway rolling stock frame, wherein ends of the rotatable bottom shelves are supported by wear resistant support plates.

Additional locating retaining elements can also be in the form of support bottom pivot bearings mounted on the articulated ends of railway rolling stock flatcar frames and designed for engagement with mating support top pivot bearings of the removable freight module, which is mounted in the area between flatcars above the articulated flatcar articulating assembly, wherein the support bottom pivot bearings mounted on articulated ends of railway rolling stock flatcar frames can be formed as a couple of locating bushings with an interaxial distance equal to the interaxial distance Lₒ between the support top pivot bearings of removable freight modules, when articulated flatcars are located linearly, wherein one of the bushings is fixed at one end of one of the articulated frames, and the second locating bushing is fixed at the end of the second of the articulated frames; openings of said bushings are formed as slot openings with increased longitudinal axial dimensions d₂, which are larger than the width d₁ for compensatory linear movement of the removable freight module guide pins, having a diameter D, in said slot opening, when railway rolling stock is passing curved tracks. In a particular embodiment the longitudinal axial dimension d₂ may be in total 50 - 100 mm larger than the width d₁ of slot openings. In a particular embodiment of the universal system of the invention said slot openings of the locating bushings are elliptical in shape, and the ellipsis long axis is parallel to the longitudinal axis of the railway rolling stock frames, having said locating bushings fixed thereto.

The support bottom pivot bearings are fixed to the center girders of corresponding railway rolling stock frames.

The support bottom pivot bearings can be vertical guide pins with a diameter D, designed to be received in the mating guide slot openings with a diameter d₁ and with a longitudinal dimension d₂. Moreover, the vertical guide pins of the support bottom pivot bearings can be also fixed to the center girders of articulated railway rolling stock frames.

Removable freight modules have side stop legs. The side stop legs have a height h, which is more than the height H of the locating top pivot bearings of removable freight modules, enabling to use the stop legs as support legs while mounting removable freight modules on the ground, or as stop guide elements while stacking removable freight modules on top of each other. Thus, the height h of the side stop legs may be in a range 150 - 500 mm.

A removable freight module may be in the form of a frame with side cargo stakes and end stop walls configured for transporting dimensional cargo, such as pipes, roundwood, lumber, rolled sections, or in the form of a sealed container box with side walls, end walls and a top configured for transporting different bulk cargoes, requiring protection against environmental exposure; wherein there may be loading hatches formed in the top of the container, wherein at least one of the end walls may have an unloading hatch in its bottom portion, or in the form of an open top container box configured for transporting different cargoes, not requiring protection against environmental exposure, or in the form of a tank having filling and depleting units, or in the form of a dump-car container having a body with drive equipment and a lever system for tilting the body and opening body sides, when unloading the dump-car container.

The present invention differs from the prototype in that support bottom pivot bearings mounted on railway rolling stock and configured for receiving mating locating top pivot bearings, fixed to removable freight modules, are used as locating retaining elements for removable freight modules, wherein the removable freight modules have side supports for resting on the railway rolling stock floor or frame; the support bottom pivot bearings mounted on the railway rolling stock are located on the railway rolling stock central longitudinal axis; mating locating top pivot bearings fixed to the removable freight modules are located on the removable freight module central longitudinal axis; support bottom pivot bearings mounted on the railway rolling stock are formed as locating bushings with vertical guide openings having a diameter d₁ and configured to receive the mating locating top pivot bearings, fixed to the removable freight modules, formed as guide pins with a diameter D; the support bottom pivot bearings mounted on the railway rolling stock can be formed as vertical guide pins having a diameter D, wherein mating locating top pivot bearings fixed to the removable freight modules are in the form of locating bushings with guide openings having a diameter d₁; the diameter D of guide pins is in a range of 50 to 350 mm and a height H is in a range of 45 to 380 mm; the diameter d₁ of the guide openings is in a ratio range of 1.05D to 1.46D mm; an interaxial distance Lₒ ratio between the support top pivot bearings of the removable freight modules and the body length Lₖ is in a range of 0.5 to 0.995; the support bottom pivot bearings mounted on the railway rolling stock are fixed to the railway rolling stock center girder; a flatcar with its body on a frame mounted on bogies is used as railway rolling stock; an articulated flatcar with its frames pivotally coupled through an articulating assembly and mounted on the bogies can be also used as railway rolling stock; articulated railway rolling stock frame ends are mounted on the middle common bogie; in order to place a removable freight module into the area between flatcars above the articulated flatcar articulating assembly, additional locating retaining elements are mounted on the articulated ends of frames, which elements allowing for compensatory angular and linear movement relative to articulated frames, when the railway rolling stock is passing curved tracks; additional locating retaining elements are formed as fitting supports fixed to the rotatable bottom shelves mounted so as to allow rotation in a horizontal plane and compensatory linear movement relative to the railway rolling stock frame, wherein ends of the rotatable bottom shelves are rest on wear resistant support plates; additional locating retaining elements formed as support bottom pivot bearings are mounted on articulated ends of the railway rolling stock flatcar frames; the support bottom pivot bearings mounted on articulated ends of the railway rolling stock flatcar frames are formed as a couple of locating bushings with an interaxial distance equal to the interaxial distance Lₒ between the support top pivot bearings of the removable freight modules in case of longitudinal arrangement of the articulated flatcars, wherein one of the bushings is fixed at one end of one of the articulated frames, the second locating bushing is fixed at an end of the second of the articulated frames; said locating bushings have a slot opening having a width d₁ and a longitudinal axial dimension d₂ for compensatory linear movement of the removable freight module guide pins, having a diameter D, within said slot opening, when the railway rolling stock is passing curved tracks; the longitudinal axial dimension d₂ may be in total 50 - 100 mm larger than the width d1 of the slot opening; the slot opening may be elliptical in shape, wherein the ellipsis long axis is parallel to the longitudinal axis of the railway rolling stock frame, having said locating bushings fixed thereto; the support bottom pivot bearings are fixed to the center girders of corresponding railway rolling stock frames; the support bottom pivot bearings may be formed as vertical guide pins, having a diameter D, configured to be received in the mating guide slot openings of removable freight modules; the vertical guide pins of the support bottom pivot bearings are fixed to the center girders of the railway rolling stock articulated frames; removable freight modules comprise side stop legs; the side stop legs have a height h, which is larger than the height H of the locating top pivot bearings of the removable freight modules, allowing to use them as legs, when installing removable freight modules on the ground, or as stop guide elements while stacking removable freight modules on top of each other; the height h of the side stop legs is in a range of 150 to 500 mm; the removable freight module is in the form of a frame with side cargo stakes and end stop walls, and designed for transporting dimensional cargo, such as pipes, roundwood, lumber, rolled sections; the removable freight module is in the form of a sealed container box with side walls, end walls and a top, and designed for transporting different bulk cargoes, requiring protection against environmental exposure; there are loading hatches formed in the top of the container, wherein at least one of the end walls has an unloading hatch in its bottom portion; the removable freight module is in the form of an open top container box designed for transporting different cargoes, not requiring protection against environmental exposure; the removable freight module is in the form of a tank having filling and depleting units; the removable freight module is in the form of a dump-cart container having a body with drive equipment and a lever system for tilting the body and opening body sides, when unloading the dump-cart container.

The present invention is illustrated in the drawings, in which:
- Fig. 1 shows a general view of a universal system for transporting freight modules, one of the possible embodiments in the form of an articulated railway flatcar, loaded with an embodiment of removable freight modules;
- Fig. 2 shows a top view of an articulated flatcar with removable freight modules not shown;
- Fig. 3 shows an isometric view of the same;
- Fig. 4 shows an isometric view of the same with the flatcar floor omitted for clarity;
- Fig. 5 shows a top view of the same with the floor and rotatable bottom shelves not shown for clarity;
- Fig. 6 shows a detail section "A" from Fig. 5;
- Fig. 7 shows a bottom isometric view of a removable freight module in the form of a container box;
- Fig. 8 shows an isometric view of the detail section "B" from Fig. 7;
- Fig. 9 shows an isometric view of a flatcar end with automatic coupling omitted for clarity;
- Fig. 10 shows a cross-sectional isometric view of a flatcar with a mounted removable freight module with side cargo stakes, wherein automatic coupling is omitted for clarity;
- Fig. 11 shows an isometric view of a rotatable bottom shelf, wherein the flatcar floor is omitted for clarity;
- Fig. 12 shows an isometric view of an embodiment of a removable freight module locating element formed as a guide bushing;
- Fig. 13 shows an isometric view of an embodiment of a locating element mounted on the flatcar frame in the form of a guide pin, wherein the flatcar floor is not shown for clarity;
- Fig. 14 shows a general isometric view of an exemplary application of the universal system for transporting different removable freight modules.

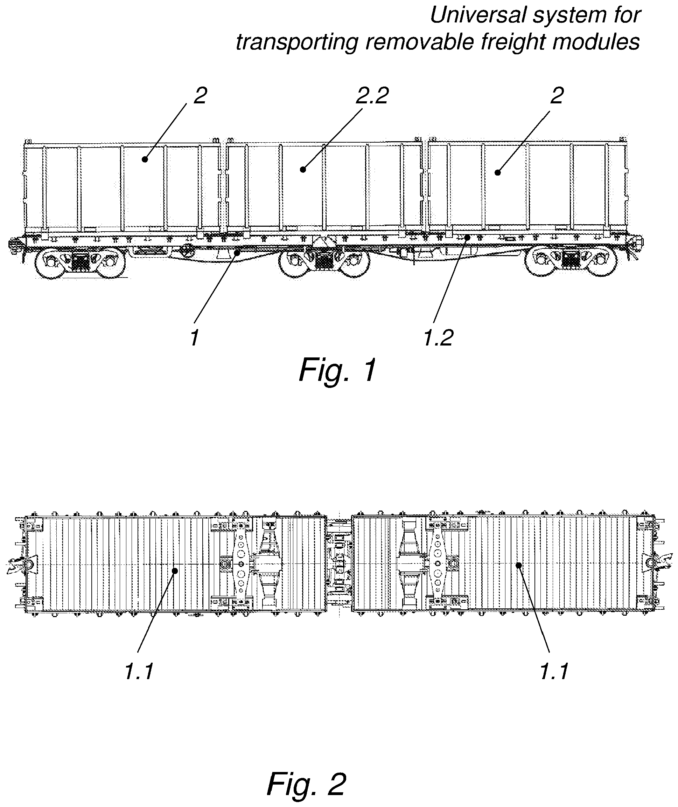

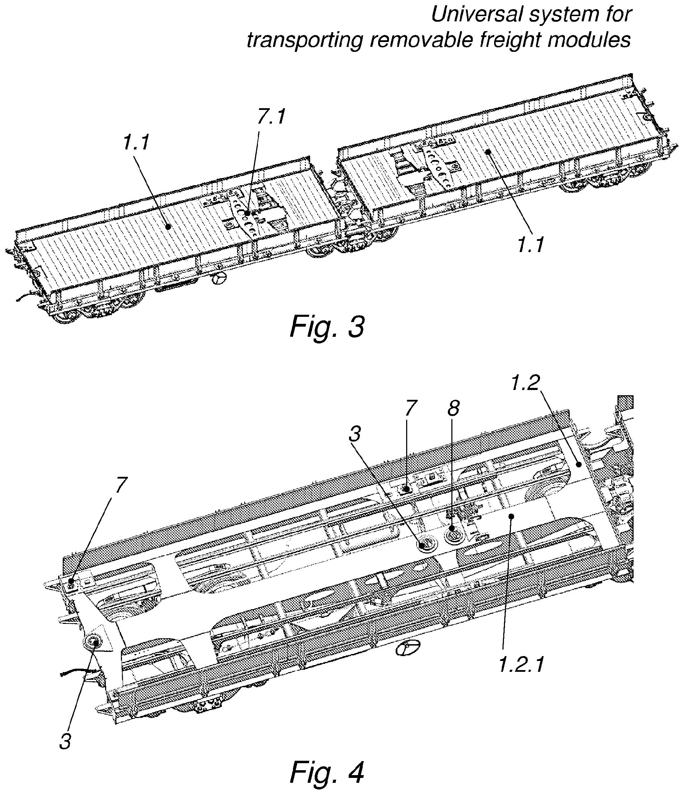

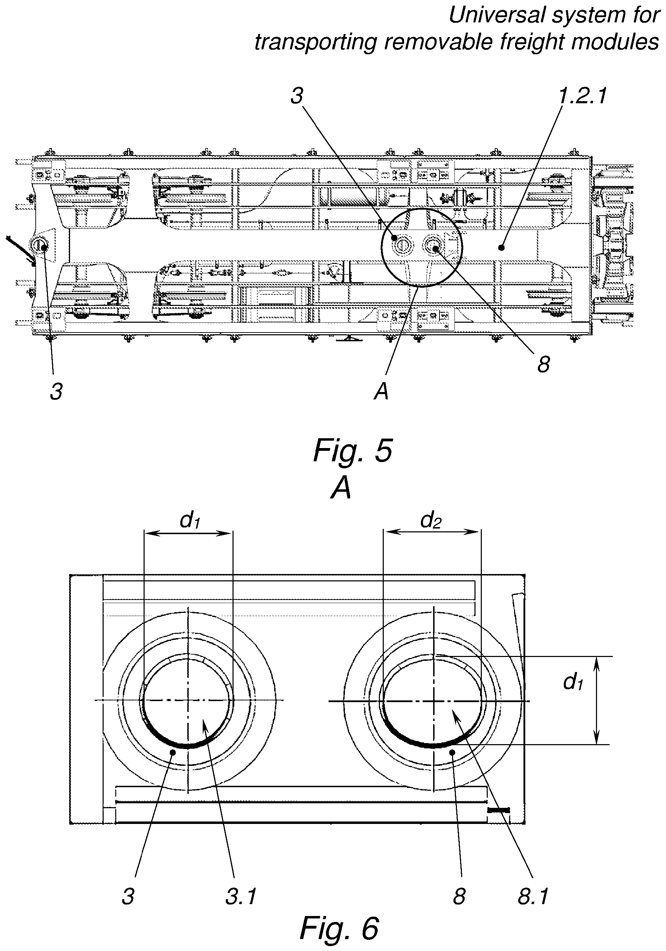

A universal transportation system for removable freight modules comprises railway rolling stock, for example in the form of a flatcar, articulated flatcars 1 (Fig. 1, 2, 3, 4, 5, 6), which are used for mounting, fixing and transporting various removable freight modules 2, intended for various cargoes, on it.

The railway rolling stock is equipped with elements for locating and retaining removable freight modules 2.

Support bottom pivot bearings located on the railway rolling stock and configured to receive mating locating top pivot bearings, fixed to removable freight modules, are used as such removable freight modules 2 locating retaining elements.

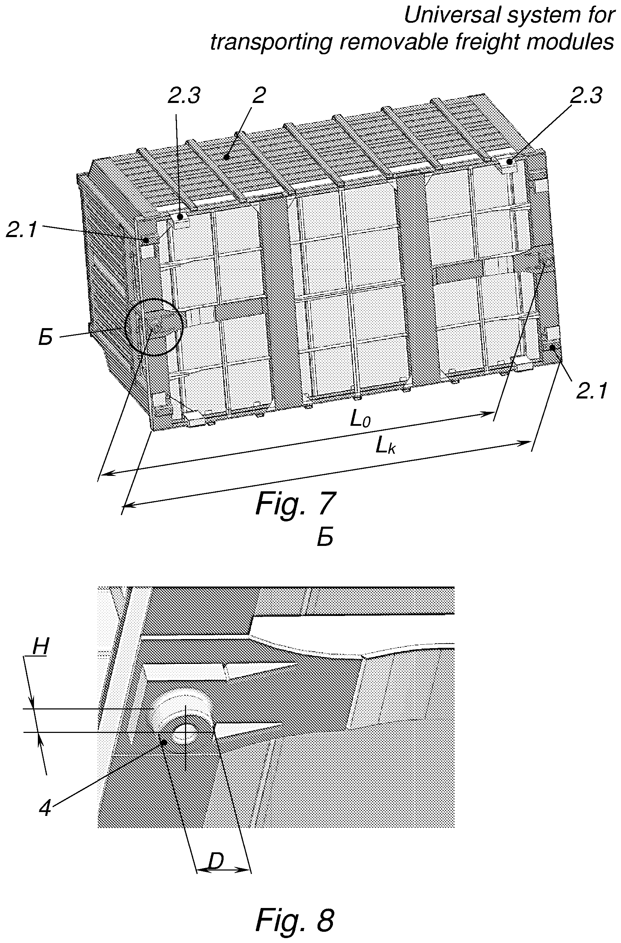

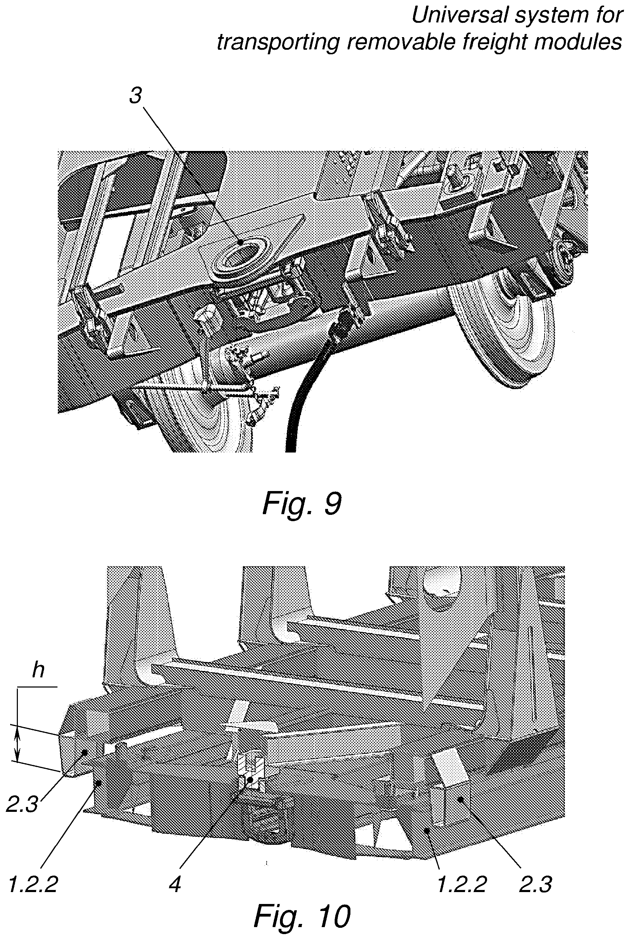

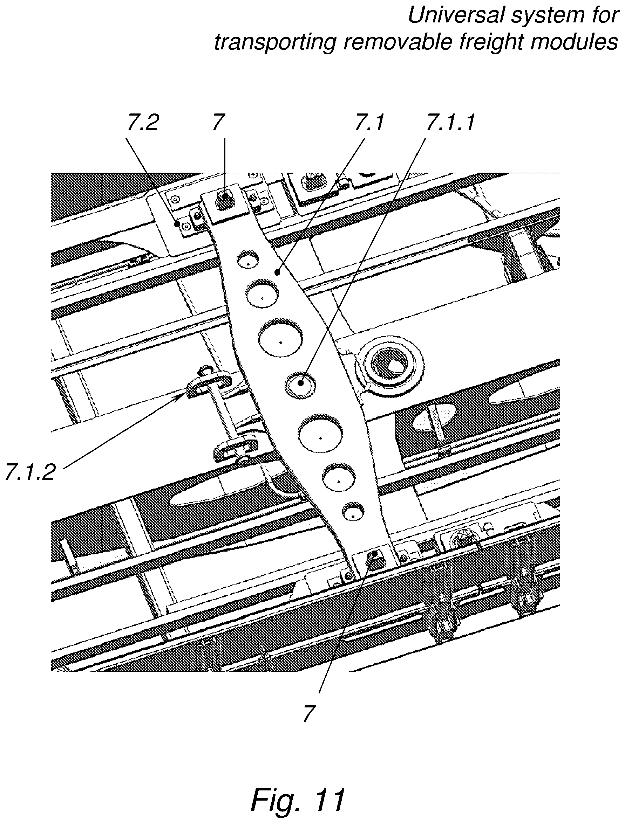

Removable freight modules are equipped with side supports 2.1 (Fig. 7, 8, 9, 10, 11) for resting on the railway rolling stock floor 1.1 or frame 1.2.

The support bottom pivot bearings mounted on the railway rolling stock are located on the railway rolling stock central longitudinal axis, wherein the mating locating top pivot bearings fixed to removable freight modules 2, 2.2 are also located on the central longitudinal axis of the removable freight modules 2, 2.2.

The support bottom pivot bearings mounted on the railway rolling stock are formed as locating bushings 3 with vertical guide openings 3.1 having a diameter d₁ and configured to receive mating locating top pivot bearings, fixed to the removable freight modules and formed as guide pins 4 having a diameter D.

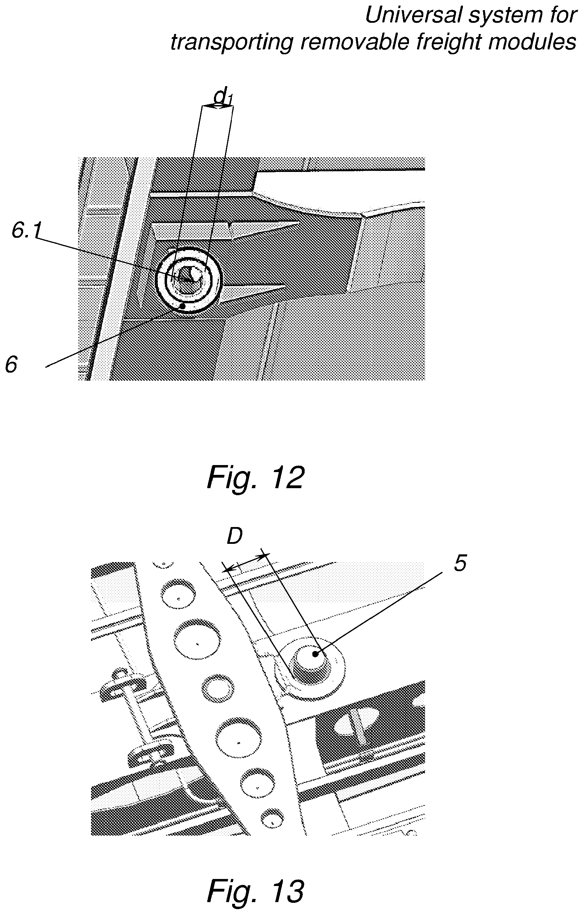

In an embodiment of the system, the support bottom pivot bearings mounted on the railway rolling stock may be formed as vertical guide pins 5 having a diameter D, wherein in this case the mating locating top pivot bearings fixed to the removable freight modules 2 should be in the form of locating bushings 6 with guide openings 6.1 having a diameter d₁. The guide pins 4, 5 may have a diameter D in a range of 50 to 350 mm, and a height H in a range of 45 to 380 mm, the guide openings 3.1, 6.1 may have a diameter d₁ within a ratio range of 1.05D to 1.46D mm, which is from 47 to 555 mm. Providing the guide pins 4, 5 with the diameter D less than 45 mm does not provide them with required durability and can lead to the guide pins 4, 5 breaking under the load, applied to the removable freight modules 2. The diameter D of more than 555 mm requires a larger width of the center girder 1.2.1, or reinforced construction of load-carrying frames of the removable freight modules 2, 2.2 (Fig. 12, 13, 14).

The interaxial distance Lₒ ratio between the support top pivot bearings of the removable freight modules and the body length Lₖ is in a range of 0.5 to 0.995 in order to reliably mount the removable freight modules 2 on the railway rolling stock. The ratio of more than 0.995 will move the support top pivot bearings to an end of the removable freight module body, which does not provide for a reliable connection between the support top pivot bearings and the frame of removable freight modules 2, 2.2. The ratio of less than 0.5 will not provide transversal stability of the removable freight module 2, 2.2 on the railway rolling stock.

The most reliable location of the support bottom pivot bearings on the railway rolling stock frame provides improved system reliability due to transferring forces of the transported removable freight modules 2 directly to the center girder 1.2.1 of the frame 1.2, which is the most durable and rigid element of the railway rolling stock load-carrying construction.

A flatcar, an articulated flatcar may be used as railway rolling stock. An articulated flatcar can be articulated with a common middle bogie.

Using the articulated bogie may allow locating the removable freight module 2.2 in the area between the flatcars above the articulating assembly. For this, additional locating retaining elements configured for compensatory angular and linear movement relative to articulated frames, when the railway rolling stock is passing curved tracks, are mounted at articulated ends of the frames.

The additional locating retaining elements may be formed as fitting supports 7, fixed to the rotatable bottom shelves 7.1 mounted so as to allow rotation in a horizontal plane and compensatory linear movement relative to the frame 1.2 of the railway rolling stock, wherein ends of the rotatable bottom shelves 7.1 are supported by wear resistant support plates 7.2. The fitting supports 7 are located on the frame 1.2 as well.

The additional locating retaining elements may be formed as additional support bottom pivot bearings mounted on articulated ends of the frames 1.2 of the railway rolling stock flatcar.

The additional support bottom pivot bearings are configured to engage mating support top pivot bearings of the removable freight module 2.2 mountable in the area between flatcars above the articulated flatcar articulating assembly.

The additional support bottom pivot bearings are formed as a couple of locating bushings 8 having an interaxial distance equal to the interaxial distance Lₒ between the support top pivot bearings of the removable freight modules 2.2, when articulated flatcars are located linearly.

Openings of the locating bushings 8 are formed as slot openings with a width d₁ and a length d₂ for compensatory linear movement of removable freight module 2.2 guide pins 4, when the railway rolling stock is passing curved tracks. The slot opening length d₂ is in total from 50 to 100 mm larger than its width d₁. Said opening 8.1 may have an elliptical shape, wherein the ellipsis long axis is parallel to the longitudinal axis of the railway rolling stock frame, having said locating bushings 8 fixed thereto. Said additional support bottom pivot bearings 8 are also fixed to the center girders 1.2.1 of the corresponding railway rolling stock frames 1.2.

In an embodiment of the proposed system, the additional support bottom pivot bearings located on articulated ends of the frames 1.2 of the railway rolling stock flatcar 1 may be formed as vertical guide pins 5. In order to provide compensatory linear movement, said pins may have an oval shape with the major axis of the ellipse perpendicular to the longitudinal axis of the railway rolling stock frame, or mating slot openings formed in the removable freight modules may have an elliptical shape, with the major axis of the ellipse parallel to the removable freight module longitudinal axis.

The removable freight modules 2, 2.2 can be equipped with side stop legs 2.3 having a height h, which is larger than the height H of the removable freight modules locating top pivot bearings. This enables to use side stop legs 2.3 as supports while mounting removable freight modules 2, 2.2 on the ground, or as stop guide elements while stacking the removable freight modules on top of each other. The height h of the side stop legs 2.3 may be in a range 150 - 500 mm.

Constructions of the removable modules are defined by the cargo type, transported therein.

Thus, for transporting dimensional cargo, such as pipes, roundwood, lumber, rolled sections, the removable freight module 9 is formed as a frame with side cargo stakes 9.1 and end stop walls 9.2.

A removable freight module in the form of a sealed container box 10 with side walls, end walls and a top is intended for transporting various bulk cargoes, requiring protection against environmental exposure. Loading hatches 10.1 may be formed in the top of the container 10, wherein at least one of the end walls may have an unloading hatch (not shown) in its bottom portion.

A removable freight module in the form of an open top container box 11 is intended for cargoes, not requiring protection against environmental exposure.

Also, removable freight modules may be formed as a tank (not shown) having filling and depleting units, as a dump-car container having a body with drive equipment and a lever system for tilting the body and opening its sides, when unloading the dump-car container (now shown).

The universal system for transporting the removable freight modules is used as follows.

A corresponding removable freight module is chosen according to the type of transported cargo.

A removable freight module is gripped with hoisting machines (now shown), raised and mounted, e.g. on an articulated flatcar 1. When lowering the removable freight module on the articulated flatcar 1 with the help of side stop legs 2.3, which seize side longitudinal girders 1.2.2 of the frame 1.2, a removable freight module, e.g. the removable freight module 2, is oriented along the articulated flatcar 1 central longitudinal axis.

After placing guide pins 4 over guide bushings 3 or 8, the removable freight module 2 in lowered on the flatcar until side supports 2.2 touch the floor 1.1 or the frame 1.2 directly. After this, the removable freight module 2 is clearly oriented and fixed on flatcar 1. The rest of the removable freight modules are mounted in a similar fashion.

Since a minimal amount of locating retaining elements is used for locating, mounting, and fixing the removable freight modules, the removable freight modules are quickly loaded on the railway rolling stock and unloaded off it.

When removable freight modules without guide pins 4 are used, corresponding fitting stops 7 are used for locating removable freight modules.

To mount the removable freight module 2.2 in the area between flatcars above an articulating assembly, rotatable bottom shelves 7.1, mounted so as to allow rotation in a horizontal plane and compensatory linear movement relative to the corresponding frames, are used. In order to preserve operability, ends of the rotatable bottom shelves 7.1 are are resting on wear resistant support plates 7.2.

When the railway rolling stock is passing curved tracks, articulated flatcars 1 mutually turn at the articulating assembly. Meanwhile, the distance between the fitting stops 7 of the rotatable bottom shelves 7.1 of adjacent articulated flatcars 1 is changed. The rotatable bottom shelves 7.1 turn in a horizontal plane at their pivoting units 7.1.1 and 7.1.2 in order to compensate such a turn and a change in the distance between the fitting stops 7. Wherein the presence of the compensatory gap between the elements of said pivoting units causes the rotatable bottom shelves 7.1 to turn in a horizontal plane and move in a longitudinal direction of the corresponding flatcars. After having passed the curved tracks, the rotatable bottom shelves 7.1 return to their initial neutral position.

Construction of the proposed system allows omitting rotatable bottom shelves 7.1. For this, the rotatable shelves 7.1 are turned in a vertical plane at the pivot 7.1.2, defining a single floor 1.1 area. Moreover, the flatcar may be used for transporting various cargoes on the floor 1.1, as well as cargoes, requiring non-removable or collapsible fitting stops 7.

Construction of the universal system for transporting freight modules also contemplates reverse positioning of the locating elements - the guide bushings 6 - on the bottom of the removable freight modules, and the guide pins 5 - on the center girder 1.2.1 of the railway rolling stock frame 1.2. This possibility of different locating elements placement significantly broadens technological opportunities for manufacturing and usage of the proposed system.

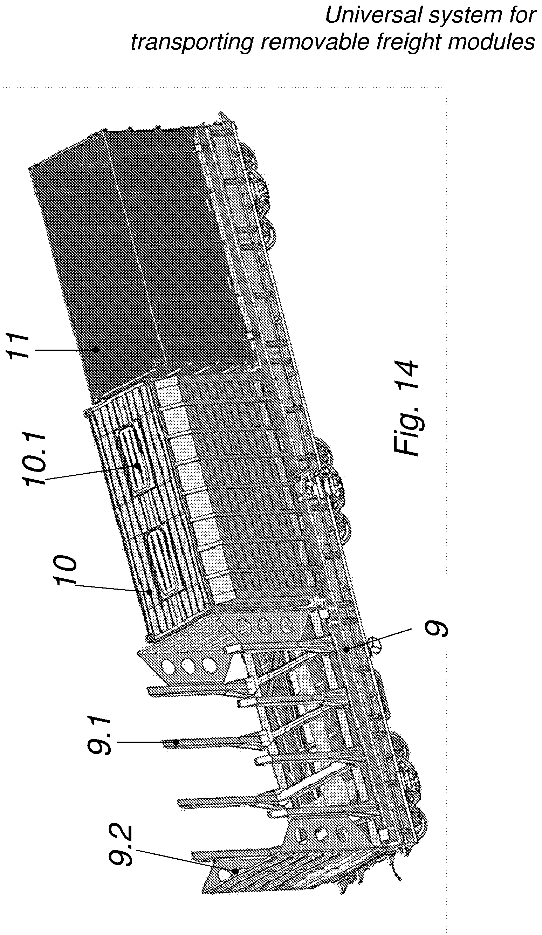

An exemplary application of the proposed universal system for transporting various removable freight modules is illustrated in Fig. 14.

Thus, the proposed universal removable freight modules transportation system significantly improves utilization efficiency of the railroad infrastructure facilities, such as railway rolling stock, hoisting equipment involved, allowing to decrease removable freight modules installation time, increases versatility and widens nomenclature of transported removable freight modules, improves reliability of the load-carrying structural elements due to applying forces from the transported removable freight modules directly to the frame center girder, which is the strongest and the most rigid element of the railway rolling stock load-carrying structure, and improves general performance of the railway rolling stock.

## Claims

1. A universal transportation system for transporting removable freight modules (2, 2.2) for transporting various types of cargo,
the modules (2, 2.2) comprising mating locating top pivot bearings fixed thereon and having side supports (2.1) for resting on a railway rolling stock floor (1.1) or frame (1.2), the system comprising
a railway rolling stock being an articulated flatcar configured for installing, fixing and transporting the removable freight modules (2, 2.2) thereon, wherein
the railway rolling stock is provided with elements for locating and retaining the removable freight modules,
**characterised in that** said elements comprise support bottom pivot bearings, mounted on the frames (1.2) of the railway rolling stock flatcars (1) and configured to engage with the mating locating top pivot bearings of the removable freight modules (2), and
additional support bottom pivot bearings mounted on the articulated ends of the frames (1.2) of the railway rolling stock flatcars (1), configured to engage with mating locating top pivot bearings of the removable freight module (2.2) mounted in the area between flatcars (1) above the articulated flatcar articulating assembly, and to compensate angular and linear movement of the top pivot bearings of the freight module (2.2) relative to the frames (1.2).

2. The universal transportation system according to claim 1, **characterized in that** the support bottom pivot bearings and additional support bottom pivot bearings mounted on the frames (1.2) of the railway rolling stock flatcars (1) are fixed to the center girder (1.2.1) of the corresponding railway rolling stock flatcar (1) frames (1.2).

3. The universal transportation system according to claim 1, **characterized in that** the support bottom pivot bearings mounted on the frames (1.2) of the railway rolling stock flatcars (1) are formed as locating bushings (3) with vertical guide openings having a diameter d₁ and the mating locating top pivot bearings fixed to the removable freight modules (2) are formed as vertical guide pins (5) having a diameter D, wherein the guide openings of the locating bushings (3) are configured to receive the guide pins (5).

4. The universal transportation system according to claim 1, **characterized in that** the additional support bottom pivot bearings mounted on the articulated ends of the frames (1.2) of the railway rolling stock flatcars (1) are formed as vertical guide pins (5) having a diameter D.

5. The universal transportation system according to any of claims 3, 4, **characterized in that** the diameter D of the guide pins (5) is in a range of 50 to 350 mm and a height H is in a range of 45 to 380 mm.

6. The universal transportation system according to any of claims 3, 4, **characterized in that** the diameter d₁ of the guide openings of the locating bushings (3) to the guide pins (5) diameter D ratio is in a range of 1.05 to 1.46.

7. The universal transportation system according to claim 1, **characterized in that** the railway rolling stock is a flatcar (1) with its body on a frame (1.2) mounted on bogies.

8. The universal transportation system according to claim 1, **characterized in that** the frames (1.2) of the articulated flatcar pivotally coupled through an articulating assembly and mounted on the bogies.

9. The universal transportation system according to claim 1, **characterized in that** articulated railway rolling stock frame (1.2) ends are mounted on the middle common bogie.

10. The universal transportation system according to claim 1, **characterized in that** the additional support bottom pivot bearings mounted on articulated ends of the railway rolling stock flatcar (1) frames (1.2) are formed as a couple of locating bushings (8), wherein one of the bushings (8) is fixed at one end of one of the articulated frames (1.2), the second locating bushing (8) is fixed at an end of the second of the articulated frames.

11. The universal transportation system according to claim 10, **characterized in that** the mating locating top pivot bearings fixed to the removable freight modules (2.2) are formed as vertical guide pins (5) having a diameter D, and openings of the locating bushings (8) are formed as a slot opening with a width d₁ and a length d₂, which is larger than the width d₁ for compensatory movement of the removable freight module (2.2) guide pins (5), having a diameter D, within said openings.

12. The universal transportation system according to claim 10, **characterized in that** the length d₂ is in total 50 - 100 mm larger than the width d₁.

13. The universal transportation system according to any of claims 11-12, **characterized in that** the slot opening of the locating bushings (8) is elliptical in shape, wherein the ellipsis long axis is parallel to the longitudinal axis of the railway rolling stock flatcar (1) frame (1.2), having said locating bushings (8) fixed thereto.

14. The universal transportation system according to claim 4, **characterized in that** the mating locating top pivot bearings fixed to the removable freight modules (2.2) are formed as locating bushings (6) with guide openings (6.1), wherein the vertical guide pins (5) are configured to be received in the mating guide openings (6.1) of the removable freight modules (2.2).

## Patentansprüche

1. **Universelles Transportsystem** für den Transport von abnehmbaren Frachtmodulen (2,2.2) für den Transport von verschiedenen Arten von Gütern,
wobei die Module (2, 2.2) zusammenpassende obere Drehlager umfassen, die daran befestigt sind, und Seitenstützen (2.1) zur Auflage auf einem Boden (1.1) oder Rahmen (1.2) eines Schienenfahrzeugs aufweisen,
das System umfasst
ein Schienenfahrzeug, das ein gelenkiger Flachwagen ist, der zum Installieren, Befestigen und Transportieren der abnehmbaren Frachtmodule (2, 2.2) darauf konfiguriert ist, wobei
die Schienenfahrzeuge sind mit Elementen zur Aufnahme und Halterung der herausnehmbaren Frachtmodule versehen,
**dadurch gekennzeichnet, dass** die Elemente umfassen
untere Schwenklager, die an den Rahmen (1.2) der Schienenfahrzeug-Flachwagen (1) angebracht sind und so konfiguriert sind, dass sie mit den passenden oberen Schwenklagern der abnehmbaren Frachtmodule (2) in Eingriff kommen, und
zusätzliche untere Stützdrehzapfenlager, die an den gelenkigen Enden der Rahmen (1.2) der Schienenfahrzeug-Flachwagen (1) angebracht sind, die so konfiguriert sind, dass sie mit passenden oberen Feststelldrehzapfenlagern des abnehmbaren Frachtmoduls (2.2) in Eingriff kommen, das in dem Bereich zwischen den Flachwagen (1) oberhalb der gelenkigen Flachwagen-Gelenkbaugruppe angebracht ist, und um eine Winkel- und Linearbewegung der oberen Drehzapfenlager des Frachtmoduls (2.2) relativ zu den Rahmen (1.2) auszugleichen.

2. Universelles Transportsystem nach Anspruch 1, **dadurch gekennzeichnet, dass** die an den Rahmen (1.2) der Schienenfahrzeug-Flachwagen (1) angebrachten Stützbodenschwenklager und zusätzlichen Stützbodenschwenklager am Mittelträger (1.2.1) der entsprechenden Rahmen (1.2) der Schienenfahrzeug-Flachwagen (1) befestigt sind.

3. Universelles Transportsystem nach Anspruch 1, **dadurch gekennzeichnet, dass** die an den Rahmen (1.2) der Eisenbahnwaggons (1) angebrachten unteren Stützzapfenlager als Aufnahmebuchsen (3) mit vertikalen Führungsöffnungen mit einem Durchmesser d1 und die an den abnehmbaren Frachtmodulen (2) befestigten oberen Gegenstützzapfenlager als vertikale Führungsbolzen (5) mit einem Durchmesser D ausgebildet sind, wobei die Führungsöffnungen der Aufnahmebuchsen (3) zur Aufnahme der Führungsbolzen (5) ausgebildet sind.

4. Universelles Transportsystem nach Anspruch 1, **dadurch gekennzeichnet, dass** die an den gelenkigen Enden der Rahmen (1.2) der Schienenfahrzeug-Flachwagen (1) angebrachten zusätzlichen Stützfuß-Drehlager als vertikale Führungsbolzen (5) mit einem Durchmesser D ausgebildet sind.

5. Universelles Transportsystem nach einem der Ansprüche 3, 4, **dadurch gekennzeichnet, dass** der Durchmesser D der Führungsstifte (5) in einem Bereich von 50 bis 350 mm und eine Höhe H in einem Bereich von 45 bis 380 mm liegt.

6. Universelles Transportsystem nach einem der Ansprüche 3, 4, **dadurch gekennzeichnet, dass** das Verhältnis des Durchmessers d1 der Führungsöffnungen der Aufnahmebuchsen (3) zum Durchmesser D der Führungsstifte (5) in einem Bereich von 1,05 bis 1,46 liegt.

7. Universelles Transportsystem nach Anspruch 1, **dadurch gekennzeichnet, dass** das Schienenfahrzeug ein Flachwagen (1) ist, dessen Aufbau auf einem Rahmen (1.2) auf Drehgestellen montiert ist.

8. Universelles Transportsystem nach Anspruch 1, **dadurch gekennzeichnet, dass** die Rahmen (1.2) des Gelenkflachwagens über eine Gelenkanordnung schwenkbar gekoppelt und auf den Drehgestellen montiert sind.

9. Universelles Transportsystem nach Anspruch 1, **dadurch gekennzeichnet, dass** die Enden des Gelenkrahmens (1.2) des Schienenfahrzeugs auf dem mittleren gemeinsamen Drehgestell montiert sind.

10. Universelles Transportsystem nach Anspruch 1, **dadurch gekennzeichnet, dass** die zusätzlichen Stützboden-Drehlager, die an den gelenkigen Enden der Rahmen (1.2) des Schienenfahrzeug-Flachwagens (1) angebracht sind, als ein Paar von Aufnahmebuchsen (8) ausgebildet sind, wobei eine der Buchsen (8) an einem Ende eines der gelenkigen Rahmen (1.2) befestigt ist und die zweite Aufnahmebuchse (8) an einem Ende des zweiten der gelenkigen Rahmen befestigt ist.

11. Universelles Transportsystem nach Anspruch 10, **dadurch gekennzeichnet, dass** die an den abnehmbaren Frachtmodulen (2.2) befestigten Gegenlager als vertikale Führungsbolzen (5) mit einem Durchmesser D ausgebildet sind und Öffnungen der Aufnahmebuchsen (8) als Schlitzöffnung mit einer Breite d1 und einer Länge d2, die größer als die Breite d1 ist, für eine Ausgleichsbewegung der Führungsbolzen (5) der abnehmbaren Frachtmodule (2.2) mit einem Durchmesser D innerhalb dieser Öffnungen ausgebildet sind.

12. Universelles Transportsystem nach Anspruch 10, **dadurch gekennzeichnet, dass** die Länge d2 insgesamt 50 bis 100 mm größer ist als die Breite d1.

13. Universelles Transportsystem nach einem der Ansprüche 11 bis 12, **dadurch gekennzeichnet, dass** die Schlitzöffnung der Aufnahmebuchsen (8) eine elliptische Form hat, wobei die Längsachse der Ellipse parallel zur Längsachse des Rahmens (1.2) des Schienenfahrzeugs (1) verläuft, an dem die Aufnahmebuchsen (8) befestigt sind.

14. Universelles Transportsystem nach Anspruch 4, **dadurch gekennzeichnet, dass** die an den abnehmbaren Gütermodulen (2.2) befestigten oberen Gegenlager als Aufnahmebuchsen (6) mit Führungsöffnungen (6.1) ausgebildet sind, wobei die vertikalen Führungsbolzen (5) zur Aufnahme in den Gegenführungsöffnungen (6.1) der abnehmbaren Gütermodule (2.2) ausgebildet sind.

## Revendications

1. **Système de transport universel** pour le transport de modules de fret amovibles (2, 2.2) pour le transport de divers types de marchandises,
les modules (2, 2.2) comprenant des paliers pivotants supérieurs complémentaires fixés sur ceux-ci et ayant des supports latéraux (2.1) pour reposer sur un plancher (1.1) ou un châssis (1.2) de matériel roulant ferroviaire,
le système comprenant
un matériel roulant ferroviaire étant un wagon plat articulé configuré pour y installer, fixer et transporter les modules de fret amovibles (2, 2.2), dans lequel le matériel roulant ferroviaire est pourvu d'éléments permettant de localiser et de retenir les modules de fret amovibles,
**caractérisé en ce que** lesdits éléments comprennent
supporter les paliers de pivotement inférieurs, montés sur les cadres (1.2) des wagons plats du matériel roulant ferroviaire (1) et configurés pour s'engager avec les paliers de pivotement supérieurs correspondants des modules de fret amovibles (2), et
des paliers de pivotement inférieurs de support supplémentaires montés sur les extrémités articulées des cadres (1.2) des wagons plats (1) du matériel roulant ferroviaire, configurés pour s'engager avec les paliers de pivotement supérieurs de positionnement correspondants du module de fret amovible (2.2) monté dans la zone entre les wagons plats (1) au-dessus de l'ensemble articulé de wagons plats, et pour compenser le mouvement angulaire et linéaire des paliers de pivotement supérieurs du module de fret (2.2) par rapport aux cadres (1.2).

2. Le système de transport universel selon la revendication 1, **caractérisé en ce que** les paliers de pivotement inférieurs de support et les paliers de pivotement inférieurs de support supplémentaires montés sur les cadres (1.2) des wagons plats de matériel roulant ferroviaire (1) sont fixés à la poutre centrale (1.2.1) des cadres (1.2) correspondants des wagons plats de matériel roulant ferroviaire (1).

3. Le système de transport universel selon la revendication 1, **caractérisé en ce que** les paliers d'appui inférieurs montés sur les châssis (1.2) des wagons de chemin de fer (1) sont réalisés sous la forme de douilles d'arrêt (3) avec des ouvertures de guidage verticales d'un diamètre d1 et les paliers d'appui supérieurs correspondants fixés sur les modules de fret amovibles (2) sont réalisés sous la forme d'axes de guidage verticaux (5) d'un diamètre D, les ouvertures de guidage des douilles d'arrêt (3) étant configurées pour recevoir les axes de guidage (5).

4. Le système de transport universel selon la revendication 1, **caractérisé en ce que** les paliers de pivotement inférieurs de support supplémentaires montés sur les extrémités articulées des cadres (1.2) des wagons de matériel roulant ferroviaire (1) sont formés comme des axes de guidage vertical (5) ayant un diamètre D.

5. Le système de transport universel selon l'une des revendications 3, 4, **caractérisé en ce que** le diamètre D des axes de guidage (5) est compris entre 50 mm et 350 mm et la hauteur H entre 45 mm et 380 mm.

6. Le système de transport universel selon l'une des revendications 3, 4, **caractérisé en ce que** le rapport entre le diamètre d1 des ouvertures de guidage des douilles de positionnement (3) et le diamètre D des goupilles de guidage (5) est compris entre 1,05 et 1,46.

7. Le système de transport universel selon la revendication 1, **caractérisé en ce que** le matériel roulant ferroviaire est un wagon plat (1) dont la caisse est montée sur un châssis (1.2) monté sur des bogies.

8. Le système de transport universel selon la revendication 1, **caractérisé en ce que** les châssis (1.2) du wagon plat articulé sont couplés de manière pivotante par un ensemble articulé et montés sur les bogies.

9. Le système de transport universel selon la revendication 1, **caractérisé en ce que** les extrémités du châssis du matériel roulant ferroviaire articulé (1.2) sont montées sur le bogie commun central.

10. Le système de transport universel selon la revendication 1, **caractérisé en ce que** les paliers de pivotement inférieurs de support supplémentaires montés sur les extrémités articulées des cadres (1.2) des wagons plats (1) du matériel roulant ferroviaire sont formés comme un couple de douilles de fixation (8), dans lequel une des douilles (8) est fixée à une extrémité d'un des cadres articulés (1.2), la deuxième douille de fixation (8) est fixée à une extrémité du deuxième des cadres articulés.

11. Le système de transport universel selon la revendication 10, **caractérisé en ce que** les paliers de pivotement supérieurs de fixation correspondants fixés aux modules de fret amovibles (2.2) sont formés comme des broches de guidage verticales (5) ayant un diamètre D, et les ouvertures des douilles de fixation (8) sont formées comme une ouverture à fente avec une largeur d1 et une longueur d2, qui est plus grande que la largeur d1 pour le mouvement compensatoire des broches de guidage (5) du module de fret amovible (2.2), ayant un diamètre D, dans lesdites ouvertures.

12. Le système de transport universel selon la revendication 10, **caractérisé en ce que** la longueur d2 est au total de 50 mm à 100 mm supérieure à la largeur d1.

13. Le système de transport universel selon l'une des revendications 11-12, **caractérisé en ce que** l'ouverture de la fente des douilles de positionnement (8) est de forme elliptique, dans laquelle le grand axe de l'ellipse est parallèle à l'axe longitudinal du châssis (1.2) du wagon plat (1) du matériel roulant ferroviaire, sur lequel sont fixées lesdites douilles de positionnement (8).

14. Le système de transport universel selon la revendication 4, **caractérisé en ce que** les paliers de pivotement supérieurs de fixation complémentaires fixés aux modules de fret amovibles (2.2) sont formés comme des douilles de fixation (6) avec des ouvertures de guidage (6.1), dans lequel les broches de guidage verticales (5) sont configurées pour être reçues dans les ouvertures de guidage complémentaires (6.1) des modules de fret amovibles (2.2).
